# EUROPEAN PATENT APPLICATION

(11) **EP 3 588 487 A1**
(43) Date of publication of application: **01.01.2020**
(21) Application number: 17897408.5
(22) Date of filing: 08.11.2017
(51) Int. Cl.: G10K 11/168, B32B 3/26, B32B 27/36, B32B 27/40, B60C 5/00, G10K 11/16

(54) **SOUND-ABSORBING MATERIAL**

(30) Priority: 27.02.2017 JP 2017034962
(71) Applicant: Nitto Denko Corporation, Osaka 567-8680 (JP)
(72) Inventor: HOSODA, Kosuke, Ibaraki-shi Osaka 567-8680 (JP); OKAHARA, Kai, Ibaraki-shi Osaka 567-8680 (JP)
(74) Representative: Müller-Boré & Partner Patentanwälte PartG mbB
(86) International application number: PCT/JP2017/040232
(87) International publication number: WO 2018/154864

(57) **Abstract**

Provided is a sound-absorbing material that is thin and lightweight and is excellent in low-frequency sound-absorbing property. The sound-absorbing material of the present invention includes a laminated structure including in this order: a first perforated layer; a first porous layer; a second perforated layer; and a second porous layer, wherein the first perforated layer has a plurality of through-holes in its thickness direction, wherein the second perforated layer has a plurality of through-holes in its thickness direction, and wherein the first perforated layer has a thickness of less than 1 mm.

## Description

### Technical Field

The present invention relates to a sound-absorbing material.

### Background Art

Asa sound-absorbing material, hitherto, there have been widely used a fiber-based material, such as glass wool, and a foamed material, such as urethane foam. However, such materials each have a poor low-frequency sound-absorbing property, and hence a material having a large thickness needs to be used in order to achieve sufficient sound absorption at a low frequency.

In order to perform low-frequency sound absorption with a material having a limited thickness, a low-frequency sound-absorbing effect is generally obtained through resonance.

As a method of obtaining a low- frequency sound-absorbing effect through resonance, there are given a method involving using a plate or a membrane, and a method involving forming a Helmholtz resonator using a slit or a perforated panel. In particular, a method involving forming a Helmholtz resonator using a slit or a perforated panel (in particular, a combination of the perforated panel and a backing layer) is often adopted. However, the perforated panel has a problem of being heavy in weight and a problem of being limited in degree of freedom in shape.

There is a report of a sound-absorbing material in which porous sheets, such as foamed plastics, and dense sheets having through-holes are alternately laminated (Patent Literature 1). However, this sound-absorbing material requires relatively thick dense sheets, and hence involves difficulty in achieving both a low-frequency sound-absorbing property and lightweightness.

### Citation List

### Patent Literature

[PTL 1] JP 04-37994 B2

### Summary of Invention

### Technical Problem

An object of the present invention is to provide a sound-absorbing material that is thin and lightweight and is excellent in low-frequency sound-absorbing property.

### Solution to Problem

According to one embodiment of the present invention, there is provided a sound-absorbing material, including a laminated structure including in this order: a first perforated layer; a first porous layer; a second perforated layer; and a second porous layer, wherein the first perforated layer has a plurality of through-holes in its thickness direction, wherein the second perforated layer has a plurality of through-holes in its thickness direction, and wherein the first perforated layer has a thickness of less than 1 mm.

In one embodiment, a plurality of surface opening portions of the first perforated layer formed by the plurality of through-holes of the first perforated layer have a maximum hole diameter of 1 mm or more.

In one embodiment, a surface opening ratio of the first perforated layer, which is a ratio of the plurality of surface opening portions in an entire surface of the first perforated layer, is 20% or less.

In one embodiment, a plurality of surface opening portions of the second perforated layer formed by the plurality of through-holes of the second perforated layer have a maximum hole diameter of 1 mm or more.

In one embodiment, a surface opening ratio of the second perforated layer, which is a ratio of the plurality of surface opening portions in an entire surface of the second perforated layer, is 20% or less.

In one embodiment, the second perforated layer has a thickness of less than 1 mm.

In one embodiment, the first porous layer has a thickness of 1 mm or more.

In one embodiment, the second porous layer has a thickness of 1 mm or more.

In one embodiment, the sound-absorbing material according to the one embodiment of the present invention has a total thickness of less than 300 mm.

In one embodiment, the first porous layer has a plurality of hole portions each formed from at least one surface of the first porous layer in its thickness direction with a length of D1 or less, D1 representing a thickness of the first porous layer, and a plurality of surface opening portions of the first porous layer formed by the plurality of hole portions have a maximum hole diameter of 1 mm or more.

In one embodiment, the plurality of surface opening portions of the first porous layer and a plurality of surface opening portions of the first perforated layer are arranged at overlapping positions in plan view.

In one embodiment, the second porous layer has a plurality of hole portions each formed from at least one surface of the second porous layer in its thickness direction with a length of D2 or less, D2 representing a thickness of the second porous layer, andaplurality of surface opening portions of the second porous layer formed by the plurality of hole portions have a maximum hole diameter of 1 mm or more.

In one embodiment, the plurality of surface opening portions of the second porous layer and a plurality of surface opening portions of the second perforated layer are arranged at overlapping positions in plan view.

Inone embodiment, the sound-absorbingmaterial has a plurality of through-holes extending from a surface of the first perforated layer opposite to the first porous layer to a surface of the second porous layer opposite to the second perforated layer.

In one embodiment, a material for forming the first perforated layer includes at least one kind selected from a resin, a metal, a rubber, an inorganic material, a woven fabric, and a non-woven fabric.

In one embodiment, a material for forming the second perforated layer includes at least one kind selected from a resin, a metal, a rubber, an inorganic material, a woven fabric, and a non-woven fabric.

In one embodiment, a material for forming the first porous layer includes at least one kind selected from a porous polymer material, a porous metal material, a porous inorganic material, a porous woven fabric, a porous non-woven fabric, a fibrous material, and a polymer monolithic material.

In one embodiment, a material for forming the second porous layer includes at least one kind selected from a porous polymer material, a porous metal material, a porous inorganic material, a porous woven fabric, a porous non-woven fabric, a fibrous material, and a polymer monolithic material.

### Advantageous Effects of Invention

According to the present invention, the sound-absorbing material that is thin and lightweight and is excellent in low-frequency sound-absorbing property can be provided.

### Brief Description of Drawings

FIG. **1** is a schematic cross-sectional view for illustrating a sound-absorbing material according to one embodiment of the present invention.
FIG. **2** is a schematic cross-sectional view for illustrating a sound-absorbing material according to a more specific embodiment of the present invention.
FIG. **3** is a schematic cross-sectional view for illustrating a sound-absorbing material according to a more specific embodiment of the present invention.
FIGS. **4** are perspective views for illustrating sound-absorbing materials according to some embodiments of the present invention.
FIGS. **5** are schematic cross-sectional views for illustrating some embodiments in the case where a first porous layer has hole portions.
FIGS. **6** are schematic cross-sectional views for illustrating some embodiments in the case where a second porous layer has hole portions.
FIG. **7** is a graph for showing the sound absorption coefficients of sound-absorbing materials (1) to (4).
FIG. **8** is a graph for showing the sound absorption coefficients of sound-absorbing materials (5) to (8).
FIG. **9** is a graph for showing the sound absorption coefficient of a sound-absorbing material (C1).
FIG. **10** is a graph for showing the sound absorption coefficients of sound-absorbing materials (C2) to (C5).

### Description of Embodiments

In the present invention, the term "perforated layer" means a layer having holes penetrating therethrough in the thickness direction of the layer (through-holes) . In the present invention, the term "porous layer" means a layer having a plurality of voids (pores).

A sound-absorbing material of the present invention has a laminated structure including a first perforated layer, a first porous layer, a second perforated layer, and a second porous layer in the stated order. The sound-absorbing material of the present invention may include any appropriate other layer as long as the sound-absorbing material has the laminated structure including the first perforated layer, the first porous layer, the second perforated layer, and the second porous layer in the stated order. Such other layer may have, for example, one or more through-holes.

Each of the first perforated layer, the first porous layer, the second perforated layer, and the second porous layer may be formed of a single layer, or may be a laminate of two or more layers.

It is preferred that: the sound-absorbing material of the present invention have the laminated structure including the first perforated layer, the first porous layer, the second perforated layer, and the second porous layer in the stated order; and the first perforated layer serve as an outermost layer.

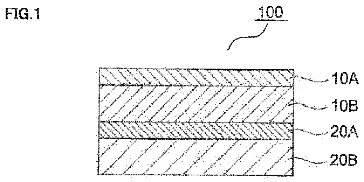

FIG. **1** is a schematic cross-sectional view for illustrating a sound-absorbing material according to one embodiment of the present invention. In FIG. **1****,** a sound-absorbing material **100** of the present invention includes a first perforated layer **10A,** a first porous layer **10B,** a second perforated layer **20A,** and a second porous layer **20B.** In FIG. **1****,** the first perforated layer **10A** and the second porous layer **20B** serve as outermost layers. In FIG. **1****,** the through-holes of the first perforated layer **10A** and the second perforated layer **20A,** and the pores of the first porous layer **10B** and the second porous layer **20B** are not shown.

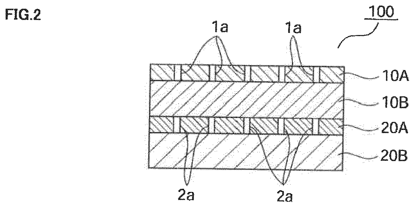

FIG. **2** is a schematic cross-sectional view for illustrating a sound-absorbing material according to a more specific embodiment of the present invention. In FIG. **2****,** a sound-absorbing material **100** of the present invention includes a first perforated layer **10A,** a first porous layer **10B,** a second perforated layer **20A,** and a second porous layer **20B.** In FIG. **2****,** the first perforated layer **10A** and the second porous layer **20B** serve as outermost layers. In FIG. **2****,** the first perforated layer **10A** has a plurality of through-holes **1a** in its thickness direction. In FIG. **2****,** the second perforated layer **20A** has a plurality of through-holes **2a** in its thickness direction. The pores of the first porous layer **10B** and the second porous layer **20B** are not shown. In FIG. **2****,** the through-holes **1a** and the through-holes **2a** are all arranged at overlapping positions in planview, but may partly be arranged at non-overlapping positions, or may all be arranged at non-overlapping positions.

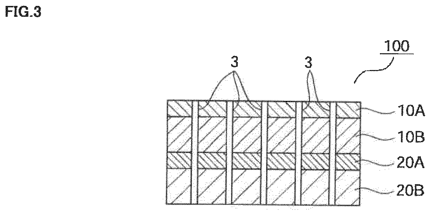

FIG. **3** is a schematic cross-sectional view for illustrating a sound-absorbing material according to a more specific embodiment of the present invention. In FIG. **3****,** a sound-absorbing material **100** of the present invention includes a first perforated layer **10A,** a first porous layer **10B,** a second perforated layer **20A,** and a second porous layer **20B.** In FIG. **3****,** the first perforated layer **10A** and the second porous layer **20B** serve as outermost layers. In FIG. **3****,** the sound-absorbing material **100** of the present invention has a plurality of through-holes 3 extending from the surface of the first perforated layer **10A** opposite to the first porous layer **10B** to the surface of the second porous layer **20B** opposite to the second perforated layer **20A.** The pores of the first porous layer **10B** and the second porous layer **20B** are not shown.

The sound-absorbing material of the present invention has a total thickness of preferably less than 300 mm, more preferably from 1 mm to 200 mm, still more preferably from 3 mm to 100 mm, particularly preferably from 5 mm to 50 mm. When the total thickness of the sound-absorbing material of the present invention falls within the above-mentioned range, the sound-absorbing material is thin, and hence can be used for various purposes each requiring a thin sound-absorbing material.

The average density of the sound-absorbing material of the present invention is preferably 300 kg/m³ or less, more preferably from 1 kg/m³ to 200 kg/m³, still more preferably from 5 kg/m³ to 150 kg/m³, particularly preferably from 10 kg/m³ to 100 kg/m³, most preferably from 20 kg/m³ to 50 kg/m³. When the density of the sound-absorbing material of the present invention falls within the above-mentioned range, a sound-absorbing material that is more lightweight and is excellent in low-frequency sound-absorbing property can be provided.

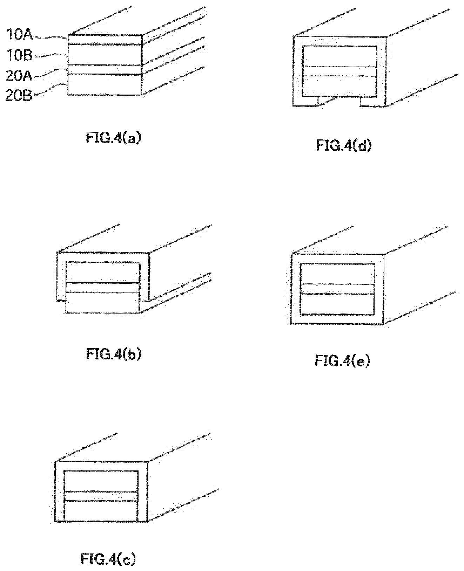

The sound-absorbing material of the present invention may adopt an embodiment in which, as illustrated in the perspective view of FIG. **4(a)**, the first perforated layer **10A** does not cover side surfaces of the sound-absorbing material, may adopt an embodiment in which, as illustrated in the perspective view of FIG. **4(b)****,** the first perforated layer **10A** covers part of the side surfaces, may adopt an embodiment in which, as illustrated in the perspective view of FIG. **4(c)****,** the first perforated layer **10A** covers the entire side surfaces, may adopt an embodiment in which, as illustrated in the perspective view of FIG. **4 (d)**, the first perforated layer **10A** covers the entire side surfaces and part of the back surface of the sound-absorbing material, or may adopt an embodiment in which, as illustrated in the perspective view of FIG. **4(e)**, the first perforated layer **10A** covers the entire side surfaces and the entire back surface. In addition, the sound-absorbing material of the present invention may adopt an embodiment in which the part covering at least part of the side surfaces or the part covering at least part of the back surface in the embodiment illustrated in FIG. **4(b),** FIG. **4(c),** FIG. **4(d)**, or FIG. **4(e)** is a layer other than the first perforated layer **10A.**

At least part of each of the end surfaces of the sound-absorbing material of the present invention in its lengthwise direction may be blocked with any appropriate layer to the extent that the effect of the present invention is not impaired. In addition, the end surfaces of the sound-absorbing material of the present invention in its lengthwise direction may each be blocked through the deformation of a cross-sectional shape by pressing or the like.

The sound-absorbing material of the present invention is thin and lightweight and is excellent in low-frequency sound-absorbing property, and hence can be adopted in various applications. The sound-absorbing material of the present invention can express an extremely excellent sound-absorbing property in a low-frequency region, and hence can be adopted, for example, as a sound-absorbing material for a tire, in particular, as a measure against a cavernous resonance. Particularly when the sound-absorbing material of the present invention is adopted as a sound-absorbing material for a tire, it is preferred that an excellent sound-absorbing property be expressed in the region of from 200 Hz to 300 Hz. When the sound-absorbing material of the present invention is used as a sound-absorbing material for a tire, the embodiment illustrated in FIG. **4(b),** FIG. **4(c),** FIG. **4(d),** or FIG. **4(e)** is preferred, and the embodiment illustrated in FIG. **4(c),** FIG. **4(d),** or FIG. **4(e)** is more preferred, from the viewpoint of allowing a more excellent sound-absorbing property in a tire to be expressed.

When the sound-absorbing material of the present invention is used as a sound-absorbing material for a tire, any one of its first perforated layer side and second porous layer side may be arranged on a tire side, and from the viewpoint of allowing a more excellent sound-absorbing property in a tire to be expressed, it is preferred that the second porous layer side be fixed to the tire side. Any appropriate means may be adopted as means for fixing the sound-absorbing material of the present invention to the tire depending on an environment in which the tire is required to be used. As such means, for example, there is given an acrylic double-sided tape for a tire to be infrequently used in a low-temperature environment, and there is given a rubber-based double-sided tape for a tire to be frequently used in a low-temperature environment.

An example of the acrylic double-sided tape serving as the means for fixing the sound-absorbing material of the present invention to the tire is an acrylic double-sided tape that includes an acrylic pressure-sensitive adhesive layer formed of a pressure-sensitive adhesive composition including a (meth) acrylic polymer obtained by polymerizing a monomer composition containing an alkyl (meth)acrylate (e.g., 2-ethylhexyl acrylate), (meth)acrylic acid, and an epoxy group-containing (meth)acrylate (e.g., glycidyl methacrylate) and a cross-linking agent (e.g., an isocyanate-based cross-linking agent) (e.g., a base material-less double-sided tape having a configuration "acrylic pressure-sensitive adhesive layer/separator").

The thickness of the acrylic double-sided tape serving as the means for fixing the sound-absorbing material of the present invention to the tire is preferably 360 µm or less, more preferably 260 µm or less, still more preferably 160 µm or less, particularly preferably 60 µm or less. The lower limit of the thickness is preferably 4 µm or more, more preferably 20 µm or more, still more preferably 30 µm or more, particularly preferably 40 µm or more.

The pressure-sensitive adhesive strength of the acrylic pressure-sensitive adhesive layer of the acrylic double-sided tape serving as the means for fixing the sound-absorbing material of the present invention to the tire at a time when a test piece obtained by bonding the acrylic pressure-sensitive adhesive layer to a backing material (PET#25) is pressure-bonded by one pass back and forth with a 2 kg roller to a rubber plate (butyl rubber) at a temperature of 23°C and a humidity of 50%RH, followed by aging at a temperature of 100°C for 30 minutes, and then the test piece is peeled from the rubber plate at a temperature of 100°C, a peel angle of 180 degrees, and a peel rate of 300 mm/min is preferably from 0.1 N/20 mm to 100 N/20 mm, more preferably from 0.3 N/20 mm to 50 N/20 mm, still more preferably from 0.5 N/20 mm to 30 N/20 mm, particularly preferably from 0.7 N/20 mm to 10 N/20 mm, most preferably from 1 N/20 mm to 5 N/20 mm.

An example of the rubber-based double-sided tape serving as the means for fixing the sound-absorbing material of the present invention to the tire is a rubber-based double-sided tape that includes a rubber-based pressure-sensitive adhesive layer formed of a pressure-sensitive adhesive composition containing a styrene-based elastomer (e.g., SIS) and a cross-linking agent (e.g., an isocyanate-based cross-linking agent) (e.g., a double-sided tape having a configuration "rubber-based pressure-sensitive adhesive layer/non-woven fabric/rubber-based pressure-sensitive adhesive layer/separator") .

The upper limit of the thickness of the rubber-based double-sided tape serving as the means for fixing the sound-absorbing material of the present invention to the tire is preferably 360 µm or less, more preferably 290 µm or less, still more preferably 220 µm or less, particularly preferably 150 µm or less. The lower limit of the thickness is preferably 4 µm or more, more preferably 40 µm or more, still more preferably 80 µm or more, particularly preferably 120 µm or more.

The pressure-sensitive adhesive strength of the rubber-based pressure-sensitive adhesive layer of the rubber-based double-sided tape serving as the means for fixing the sound-absorbing material of the present invention to the tire at a time when a test piece obtained by bonding the rubber-based pressure-sensitive adhesive layer to a backing material (PET#25) is pressure-bonded by one pass back and forth with a 2 kg roller to a rubber plate (butyl rubber) at a temperature of 23°C and a humidity of 50%RH, followed by aging at a temperature of 100°C for 30 minutes, and then the test piece is peeled from the rubber plate at a temperature of 100°C, a peel angle of 180 degrees, and a peel rate of 300 mm/min is preferably from 0.1 N/20 mm to 100 N/20 mm, more preferably from 0.3 N/20 mm to 50 N/20 mm, still more preferably from 0.5 N/20 mm to 30 N/20 mm, particularly preferably from 0.7 N/20 mm to 10 N/20 mm, most preferably from 1 N/20 mm to 5 N/20 mm.

### <First Perforated Layer>

The first perforated layer has a plurality of through-holes in its thickness direction. Any appropriate shape, such as a perfectly circular shape, an elliptical shape, a triangular shape, a quadrangular shape, a polygonal shape, or a slit shape, may be adopted as the shape of each of surface opening portions of the first perforated layer formed by the through-holes. Of such shapes, from the viewpoint of allowing the effect of the present invention to be further expressed, and the viewpoint of the ease of production, a perfectly circular shape, an elliptical shape, or a quadrangular shape is preferred, and a perfectly circular shape is more preferred. The surface opening portions of the first perforated layer formed by the plurality of through-holes of the first perforated layer may have only one kind of shape, or may have two or more kinds of shapes.

The circle-equivalent hole diameter of each of the plurality of the surface opening portions of the first perforated layer formed by the plurality of through-holes of the first perforated layer is preferably 1 mm or more, more preferably from 1 mm to 100 mm, still more preferably from 2 mm to 50 mm, still more preferably from3 mmto30 mm, still morepreferablyfrom4 mmto20 mm, particularly preferably from 5 mm to 10 mm, from the viewpoint of allowing the effect of the present invention to be further expressed. The circle-equivalent hole diameter of each surface opening portion is the diameter of a circle having the same area as the surface opening portion.

The surface opening ratio of the first perforated layer, which is the ratio of the plurality of surface opening portions of the first perforated layer in the entire surface of the first perforated layer, is preferably 20% or less, more preferably from 0.01% to 20%, still more preferably from 0.05% to 10%, still more preferably from 0.1% to 5%, still more preferably from 0.2% to 4%, particularly preferably from 0.3% to 3%, most preferably from 0.4% to 2%, from the viewpoint of allowing the effect of the present invention to be further expressed. The surface opening ratio is represented by (S_{open/}Sₜₒₜₐₗ) ×100 (%), where Sₜₒₜₐₗ (mm²) represents the area of the entire surface (including the surface opening portions), and Sₒₚₑₙ (mm²) represents the total area of the plurality of surface opening portions in the surface.

The thickness of the first perforated layer is less than 1 mm. By virtue of the thickness of the first perforated layer being less than 1 mm, in combination with other features of the present invention, a sound-absorbing material that is thin and lightweight and is excellent in low-frequency sound-absorbing property can be provided. The thickness of the first perforated layer is preferably from 0.0001 mm to 0.9999 mm, more preferably from 0.0005 mm to 0.5 mm, still more preferably from 0.001 mm to 0.2 mm, still more preferably from 0.001 mm to 0.1 mm, still more preferably from 0.001 mm to 0.05 mm, particularly preferably from 0.002 mm to 0.03 mm, most preferably from 0.004 mm to 0.015 mm, from the viewpoint of allowing the effect of the present invention to be further expressed.

The area density of the first perforated layer is preferably 1,000 g/m² or less, more preferably from 0.05 g/m² to 1,000 g/m², still more preferably from 0.5 g/m² to 500 g/m², particularly preferably from 0.5 g/m² to 200 g/m², most preferably from 3 g/m² to 50 g/m², from the viewpoint of allowing the effect of the present invention to be further expressed.

Any appropriate material may be adopted as a material for forming the first perforated layer to the extent that the effect of the present invention is not impaired. Such material ispreferably at least one kind selected from a resin, a metal, a rubber, an inorganic material, a woven fabric, and a non-woven fabric, from the viewpoint of allowing the effect of the present invention to be further expressed. Specific examples of the resin that may serve as the material for forming the first perforated layer include polyester resins (e.g., polyethylene terephthalate, polybutylene terephthalate, and polyethylene naphthalate), acrylic resins, polyolefin-based resins (e.g., polyethylene and polypropylene), polycarbonate-based resins, styrene-based resins, and polyvinyl chloride. Specific examples of the metal that may serve as the material for forming the first perforated layer include aluminum, stainless steel (SUS), iron, and copper. When the material for forming the first perforated layer is a resin, a resin having a layer shape, such as a resin film (e.g., a polyethylene terephthalate film), an adhesive tape, or a pressure-sensitive adhesive tape, may be adopted as it is, or a resin layer formed by applying a resin material capable of forming a coating film may be adopted. In addition, for example, a resin layer formed by melting a porous layer as in melt foam processing may be adopted.

The surface of the first perforated layer may be subjected to any appropriate surface treatment or surface processing to the extent that the effect of the present invention is not impaired.

### <Second Perforated Layer>

The second perforated layer has a plurality of through-holes in its thickness direction. Any appropriate shape, such as a perfectly circular shape, an elliptical shape, a triangular shape, a quadrangular shape, a polygonal shape, or a slit shape, may be adopted as the shape of each of surface opening portions of the second perforated layer formed by the through-holes. Of such shapes, from the viewpoint of allowing the effect of the present invention to be further expressed, and the viewpoint of the ease of production, a perfectly circular shape, an elliptical shape, or a quadrangular shape is preferred, and a perfectly circular shape is more preferred. The surface opening portions of the second perforated layer formed by the plurality of through-holes of the second perforated layer may have only one kind of shape, or may have two or more kinds of shapes.

The circle-equivalent hole diameter of each of the plurality of the surface opening portions of the second perforated layer formed by the plurality of through-holes of the second perforated layer is preferably 1 mm or more, more preferably from 1 mm to 100 mm, still more preferably from 2 mm to 50 mm, still more preferably from 3 mm to 30 mm, still more preferably from 4 mm to 20 mm, particularly preferably from 5 mm to 10 mm, from the viewpoint of allowing the effect of the present invention to be further expressed. The circle-equivalent hole diameter of each surface opening portion is the diameter of a circle having the same area as the surface opening portion.

The surface opening ratio of the second perforated layer, which is the ratio of the plurality of surface opening portions of the second perforated layer in the entire surface of the second perforated layer, is preferably 20% or less, more preferably from 0.01% to 20%, still more preferably from 0.05% to 10%, still more preferably from 0.1% to 5%, still more preferably from 0.2% to 4%, particularly preferably from 0.3% to 3%, most preferably from 0.4% to 2%, from the viewpoint of allowing the effect of the present invention to be further expressed. The surface opening ratio is represented by (S_{open/}Sₜₒₜₐₗ) ×100 (%), where Sₜₒₜₐₗ (mm²) represents the area of the entire surface (including the surface opening portions), and Sₒₚₑₙ (mm²) represents the total area of the plurality of surface opening portions in the surface.

The thickness of the second perforated layer is preferably less than 1 mm, more preferably from 0.0001 mm to 0.9999 mm, still more preferably from 0.0005 mm to 0.5 mm, still more preferably from 0.001 mm to 0.2 mm, still more preferably from 0.001 mm to 0.1 mm, still more preferably from 0.001 mm to 0.05 mm, particularly preferably from 0.002 mm to 0.03 mm, most preferably from 0.004 mm to 0.015 mm. When the thickness of the second perforated layer falls within the above-mentioned range, a sound-absorbing material that is thinner and more lightweight and is excellent in low-frequency sound-absorbing property can be provided.

The area density of the second perforated layer is preferably 1,000 g/m² or less, more preferably from 0.05 g/m² to 1,000 g/m², still more preferably from 0.5 g/m² to 500 g/m², particularly preferably from 0.5 g/m² to 200 g/m², most preferably from 3 g/m² to 50 g/m², from the viewpoint of allowing the effect of the present invention to be further expressed.

Any appropriate material may be adopted as a material for forming the second perforated layer to the extent that the effect of the present invention is not impaired. Suchmaterial is preferably at least one kind selected from a resin, a metal, a rubber, an inorganic material, a woven fabric, and a non-woven fabric, from the viewpoint of allowing the effect of the present invention to be further expressed. Specific examples of the resin that may serve as the material for forming the second perforated layer include polyester resins (e.g., polyethylene terephthalate, polybutylene terephthalate, and polyethylene naphthalate), acrylic resins, polyolefin-based resins (e.g., polyethylene and polypropylene), polycarbonate-based resins, styrene-based resins, and polyvinyl chloride. Specific examples of the metal that may serve as the material for forming the second perforated layer include aluminum, stainless steel (SUS), iron, and copper. When the material for forming the second perforated layer is a resin, a resin having a layer shape, such as a resin film (e.g., a polyethylene terephthalate film), an adhesive tape, or a pressure-sensitive adhesive tape, may be adopted as it is, or a resin layer formed by applying a resin material capable of forming a coating film may be adopted. In addition, for example, a resin layer formed by melting a porous layer as in melt foam processing may be adopted.

The surface of the second perforated layer may be subjected to any appropriate surface treatment or surface processing to the extent that the effect of the present invention is not impaired.

### <First Porous Layer>

The first porous layer has a plurality of voids (pores) . The pores of the first porous layer are not particularly limited in structure, and may have a structure in which at least part of each of the voids is three-dimensionally open (e.g., an open-cell structure).

The average circle-equivalent hole diameter of a plurality of surface opening portions of the first porous layer formed by the pores of the first porous layer is preferably smaller than the circle-equivalent hole diameter of each of the plurality of surface opening portions of the first perforated layer formed by the plurality of through-holes of the first perforated layer.

The average circle-equivalent hole diameter of the plurality of surface opening portions of the first porous layer formed by the pores of the first porous layer is preferably less than 5,000 µm, more preferably from 1 µm to 5,000 µm, still more preferably from 10 µm to 4,000 µm, still more preferably from 20 µm to 3,000 µm, still more preferably from 50 µm to 2,000 µm, particularly preferably from 100 µm to 1,000 µm, from the viewpoint of allowing the effect of the present invention to be further expressed. The average circle-equivalent hole diameter of surface opening portions is the average diameter of circles having the same areas as the surface opening portions.

The thickness of the first porous layer is preferably 1 mm or more, more preferably from 2 mm to 200 mm, still more preferably from 3 mm to 100 mm, particularly preferably from 4 mm to 50 mm, most preferably from 5 mm to 30 mm. When the thickness of the first porous layer falls within the above-mentioned range, a sound-absorbing material that is thinner and more lightweight and is excellent in low-frequency sound-absorbing property can be provided.

The density of the first porous layer is preferably 300 kg/m³ or less, more preferably from 1 kg/m³ to 300 kg/m³, still more preferably from 1 kg/m³ to 200 kg/m³, still more preferably from 1 kg/m³ to 100 kg/m³, still more preferably from 5 kg/m³ to 70 kg/m³, particularly preferably from 5 kg/m³ to 50 kg/m³, most preferably from 10 kg/m³ to 30 kg/m³. When the density of the first porous layer falls within the above-mentioned range, a sound-absorbing material that is more lightweight and is excellent in low-frequency sound-absorbing property can be provided.

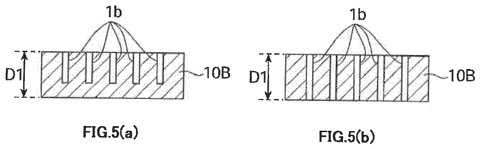

The first porous layer may have a plurality of hole portions each formed from at least one surface of the first porous layer in its thickness direction with a length of D1 or less, D1 representing the thickness of the first porous layer. Examples of such hole portions include: a plurality of hole portions **1b** that are, as illustrated in the schematic cross-sectional view of FIG. **5(a)****,** formed from one surface of the first porous layer **10B** partway through the thickness direction; and a plurality of hole portions **1b** that are, as illustrated in the schematic cross-sectional view of FIG. **5(b)**, formed from one surface of the first porous layer **10B** to the end of the thickness direction (the other surface).

The circle-equivalent hole diameter of each of the plurality of surface opening portions of the first porous layer formed by the plurality of hole portions that the first porous layer may have is preferably 1 mm or more, more preferably from 1 mm to 100 mm, still more preferably from 2 mm to 50 mm, still more preferably from 3 mmto30mm, still more preferably from 4 mm to 20 mm, particularly preferably from 5 mm to 10 mm, from the viewpoint of allowing the effect of the present invention to be further expressed. The circle-equivalent hole diameter of each surface opening portion is the diameter of a circle having the same area as the surface opening portion.

The surface opening ratio of the first porous layer, which is the ratio of the plurality of surface opening portions of the first porous layer formed by the plurality of hole portions that the first porous layer may have in the entire surface of the first porous layer, is preferably 20% or less, more preferably from 0.001% to 20%, still more preferably from 0.01% to 10%, still more preferably from 0.1% to 5%, still more preferably from 0.2% to 4%, particularly preferably from 0.3% to 3%, most preferably from 0.4% to 2%, from the viewpoint of allowing the effect of the present invention to be further expressed. The surface opening ratio is represented by (S_{open/}Sₜₒₜₐₗ) ×100 (%), where Sₜₒₜₐₗ (mm²) represents the area of the entire surface (including the surface opening portions), and Sₒₚₑₙ (mm²) represents the total area of the plurality of surface opening portions in the surface.

When the first porous layer has the plurality of hole portions, the plurality of surface opening portions of the first porous layer formed by the hole portions may be arranged at overlapping positions with the plurality of surface opening portions of the first perforated layer in plan view. In such embodiment, it is preferred that any one of the plurality of hole portions of the first porous layer be arranged in a direction extending from the first porous layer side of each of the plurality of through-holes of the first perforated layer. An example of such embodiment is an embodiment in which the sound-absorbing material of the present invention has a plurality of through-holes extending from the surface of the first perforated layer opposite to the first porous layer to the surface of the first porous layer opposite to the first perforated layer.

Any appropriate material may be adopted as a material for forming the first porous layer to the extent that the effect of the present invention is not impaired. Such material is preferably at least one kind selected from a porous polymer material, a porous metal material, a porous inorganic material, a porous woven fabric, a porous non-woven fabric, a fibrous material, and a polymer monolithic material, from the viewpoint of allowing the effect of the present invention to be further expressed. Specific examples of the porous polymer material that may serve as the material for forming the first porous layer include polyurethane foam, polystyrene foam, polyolefin (e.g., polyethylene or polypropylene) foam, and ethylene-propylene-diene rubber (EPDM) foam. Any appropriate structure may be adopted as the porous structure of the porous polymer material depending on purposes. Such structure may be, for example, a closed-cell structure in which each of cells formed by foaming is closed or an open-cell structure in which at least part of each of the cells is open. Specific examples of the fibrous material that may serve as the material for forming the first porous layer include glass wool, rock wool, and a felt material. A specific example of the polymer monolithic material that may serve as the material for forming the first porous layer is such a monolithic material made of a silicone as described in JP 2014-61457 A.

### <Second Porous Layer>

The second porous layer has a plurality of voids (pores) . The pores of the second porous layer are not particularly limited in structure, and may have a structure in which at least part of each of the voids is three-dimensionally open (e.g., an open-cell structure).

The average circle-equivalent hole diameter of a plurality of surface opening portions of the second porous layer formed by the pores of the second porous layer is preferably smaller than the circle-equivalent hole diameter of each of the plurality of surface opening portions of the second perforated layer formed by the plurality of through-holes of the second perforated layer.

The average circle-equivalent hole diameter of the plurality of surface opening portions of the second porous layer formed by the pores of the second porous layer is preferably less than 5,000 µm, more preferably from 1 µm to 5,000 µm, still more preferably from 10 µm to 4,000 µm, still more preferably from 20 µm to 3,000 µm, still more preferably from 50 µm to 2,000 µm, particularly preferably from 100 µm to 1,000 µm, from the viewpoint of allowing the effect of the present invention to be further expressed. The average circle-equivalent hole diameter of surface opening portions is the average diameter of circles having the same areas as the surface opening portions.

The thickness of the second porous layer is preferably 1 mm or more, more preferably from 2 mm to 200 mm, still more preferably from 3 mm to 100 mm, particularly preferably from 4 mm to 50 mm, most preferably from 5 mm to 30 mm. When the thickness of the second porous layer falls within the above-mentioned range, a sound-absorbing material that is thinner and more lightweight and is excellent in low-frequency sound-absorbing property can be provided.

The density of the second porous layer is preferably 300 kg/m³ or less, more preferably from 1 kg/m³ to 300 kg/m³, still more preferably from 1 kg/m³ to 200 kg/m³, still more preferably from 1 kg/m³ to 100 kg/m³, still more preferably from 5 kg/m³ to 70 kg/m³, particularly preferably from 5 kg/m³ to 50 kg/m³, most preferably from 10 kg/m³ to 30 kg/m³. When the density of the second porous layer falls within the above-mentioned range, a sound-absorbing material that is more lightweight and is excellent in low-frequency sound-absorbing property can be provided.

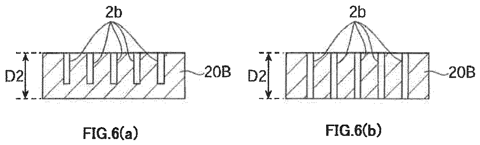

The second porous layer may have a plurality of hole portions each formed from at least one surface of the second porous layer in its thickness direction with a length of D2 or less, D2 representing the thickness of the second porous layer. Examples of such hole portions include: a plurality of hole portions **2b** that are, as illustrated in the schematic cross-sectional view of FIG. **6(a)****,** formed from one surface of the second porous layer **20B** partway through the thickness direction; and a plurality of hole portions **2b** that are, as illustrated in the schematic cross-sectional view of FIG. **6(b)****,** formed from one surface of the second porous layer **20B** to the end of the thickness direction (the other surface).

The circle-equivalent hole diameter of each of the plurality of surface opening portions of the second porous layer formed by the plurality of hole portions that the second porous layer may have is preferably 1 mm or more, more preferably from 1 mm to 100 mm, still more preferably from 2 mm to 50 mm, still more preferably from 3 mm to 30 mm, still more preferably from 4 mm to 20 mm, particularly preferably from 5 mm to 10 mm, from the viewpoint of allowing the effect of the present invention to be further expressed. The circle-equivalent hole diameter of each surface opening portion is the diameter of a circle having the same area as the surface opening portion.

The surface opening ratio of the second porous layer, which is the ratio of the plurality of surface opening portions of the second porous layer formed by the plurality of hole portions that the second porous layer may have in the entire surface of the second porous layer, is preferably 20% or less, more preferably from 0.001% to 20%, still more preferably from 0.01% to 10%, still more preferably from 0.1% to 5%, still more preferably from 0.2% to 4%, particularly preferably from 0.3% to 3%, most preferably from 0.4% to 2%, from the viewpoint of allowing the effect of the present invention to be further expressed. The surface opening ratio is represented by (S_{open/}Sₜₒₜₐₗ) ×100 (%), where Sₜₒₜₐₗ (mm²) represents the area of the entire surface (including the surface opening portions), and Sₒₚₑₙ (mm²) represents the total area of the plurality of surface opening portions in the surface.

When the second porous layer has the plurality of hole portions, the plurality of surface opening portions of the second porous layer formed by the hole portions may be arranged at overlapping positions with the plurality of surface opening portions of the second perforated layer in plan view. In such embodiment, it is preferred that any one of the plurality of hole portions of the second porous layer be arranged in a direction extending from the second porous layer side of each of the plurality of through-holes of the second perforated layer. An example of such embodiment is an embodiment in which the sound-absorbing material of the present invention has a plurality of through-holes extending from the surface of the second perforated layer opposite to the second porous layer to the surface of the second porous layer opposite to the second perforated layer.

Any appropriate material may be adopted as a material for forming the second porous layer to the extent that the effect of the present invention is not impaired. Such material is preferably at least one kind selected from a porous polymer material, a porous metal material, a porous inorganic material, a porous woven fabric, a porous non-woven fabric, a fibrous material, and a polymer monolithic material, from the viewpoint of allowing the effect of the present invention to be further expressed. Specific examples of the porous polymer material that may serve as the material for forming the second porous layer include polyurethane foam, polystyrene foam, polyolefin (e.g., polyethylene or polypropylene) foam, and ethylene-propylene-diene rubber (EPDM) foam. Any appropriate structure may be adopted as the porous structure of the porous polymer material depending on purposes. Such structure may be, for example, a closed-cell structure in which each of cells formed by foaming is closed or an open-cell structure in which at least part of each of the cells is open. Specific examples of the fibrous material that may serve as the material for forming the second porous layer include glass wool, rockwool, and a felt material. A specific example of the polymer monolithic material that may serve as the material for forming the second porous layer is such a monolithic material made of a silicone as described in JP 2014-61457 A.

### Examples

Now, the present invention is specifically described by way of Examples. However, the present invention is by no means limited to these Examples. The terms "part (s) " and "%" in Examples are by mass unless otherwise stated.

### <Measurement of Sound Absorption Coefficient>

A sound absorption coefficient was measured as a normal incidence sound absorption coefficient using an acoustic tube.

Specifically, a 4206 large tube manufactured by Bruel&Kjaer was used, and a Φ100 mm sample was produced and subjected to measurement in conformity with JIS A 1405-2. The measurement was performed under a state in which the entire back surface of the sample was bonded to the wall surface of the acoustic tube with an acrylic double-sided adhesive tape (thickness=150 µm, manufactured by Nitto Denko Corporation, product name: No. 512) so as to prevent the influence of bending vibration.

In addition, the measurement was performed under a state in which a gap was filled with silicone grease (G501 from Shin-Etsu Chemical Co., Ltd.) so as to prevent the influence of a cross - section.

### [Example 1]

ϕ5 mm through-holes were formed in a polyethylene terephthalate film (thickness=4.8 µm, manufactured by Toray Industries, Inc., product name: Lumirror) at a surface opening ratio of 0.25%, and the resultant was used as a first perforated layer.

To the first perforated layer, urethane foam (thickness=10 mm, manufactured by Inoac Corporation, product name: CALMFLEX F2) was bonded. For the bonding, an acrylic double-sided adhesive tape (thickness=50 µm, manufactured by Nitto Denko Corporation, product name: GA5905) was used.

Further, to the urethane foam side of the resultant laminate, urethane foam (thickness=10 mm, manufactured by Inoac Corporation, product name: CALMFLEX F2) was further bonded. For the bonding, an acrylic double-sided adhesive tape (thickness=150 µm, manufactured by Nitto Denko Corporation, product name: No. 512) having formed therein ϕ5 mm through-holes at a surface opening ratio of 0.25% (second perforated layer) was used.

Thus, a sound-absorbing material (1) having a configuration "[first perforated layer]/[acrylic double-sided adhesive tape]/[urethane foam (first porous layer)]/[second perforated layer]/[urethane foam (second porous layer)]" was obtained.

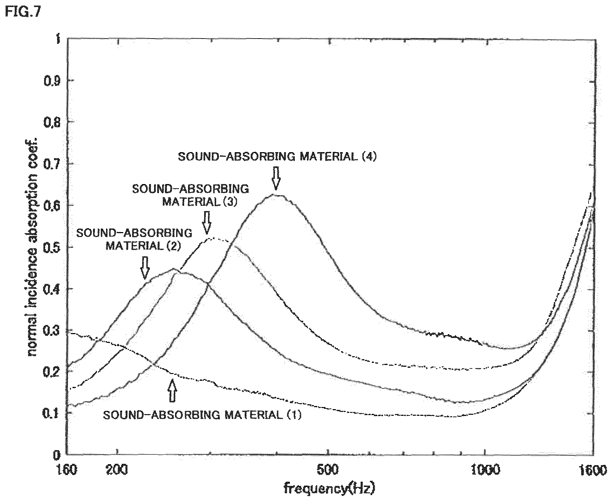

The results are shown in FIG. 7.

### [Example 2]

A sound-absorbing material (2) having a configuration " [first perforated layer]/[acrylic double-sided adhesive tape]/[urethane foam (first porous layer)] / [second perforated layer] / [urethane foam (second porous layer)] " was obtained in the same manner as in Example 1 except that the surface opening ratio at which the through-holes were formed in each of the first perforated layer and the second perforated layer was changed to 0.5%.

The results are shown in FIG. 7.

### [Example 3]

A sound-absorbing material (3) having a configuration " [first perforated layer]/[acrylic double-sided adhesive tape]/[urethane foam (first porous layer)] / [second perforated layer] / [urethane foam (second porous layer)] " was obtained in the same manner as in Example 1 except that the surface opening ratio at which the through-holes were formed in each of the first perforated layer and the second perforated layer was changed to 0.75%.

The results are shown in FIG. 7.

### [Example 4]

A sound-absorbing material (4) having a conf iguration " [first perforated layer]/[acrylic double-sided adhesive tape]/[urethane foam (first porous layer)] / [second perforated layer] / [urethane foam (second porous layer)] " was obtained in the same manner as in Example 1 except that the surface opening ratio at which the through-holes were formed in each of the first perforated layer and the second perforated layer was changed to 1.0%.

The results are shown in FIG. 7.

### [Example 5]

To a polyethylene terephthalate film (thickness=4.8 µm, manufactured by Toray Industries, Inc., product name: Lumirror), urethane foam (thickness=10 mm, manufactured by Inoac Corporation, product name: CALMFLEX F2) was bonded. For the bonding, an acrylic double-sided adhesive tape (thickness=50 µm, manufactured by Nitto Denko Corporation, product name: GA5905) was used.

Further, to the urethane foam side of the resultant laminate, urethane foam (thickness=10 mm, manufactured by Inoac Corporation, product name: CALMFLEX F2) was further bonded. For the bonding, an acrylic double-sided adhesive tape (thickness=150 µm, manufactured by Nitto Denko Corporation, product name: No. 512) was used.

ϕ5 mm through-holes were formed in the resultant laminate at a surface opening ratio of 0.25%.

Thus, a sound-absorbing material (5) having a configuration "[first perforated layer]/[acrylic double-sided adhesive tape]/[urethane foam (first porous layer)]/[second perforated layer] / [urethane foam (second porous layer)], " the sound-absorbing material (5) having a plurality of through-holes extending from the surface of the first perforated layer opposite to the first porous layer to the surface of the second porous layer opposite to the second perforated layer, was obtained.

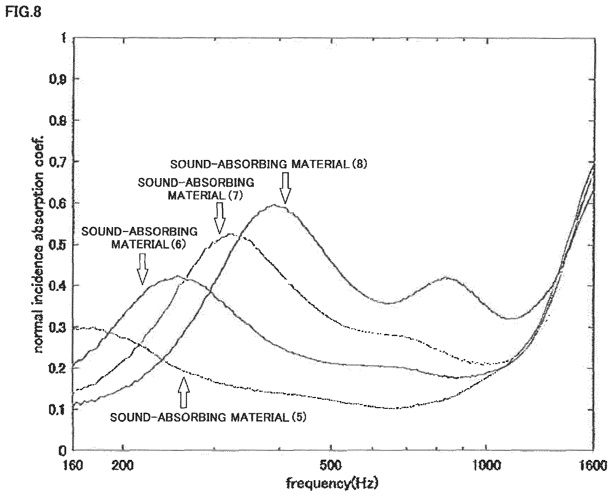

The results are shown in FIG. **8****.**

### [Example 6]

A sound-absorbing material (6) having a configuration " [first perforated layer]/[acrylic double-sided adhesive tape]/[urethane foam (first porous layer)] / [second perforated layer] / [urethane foam (second porous layer)]," the sound-absorbing material (6) having a plurality of through-holes extending from the surface of the first perforated layer opposite to the first porous layer to the surface of the second porous layer opposite to the second perforated layer, was obtained in the same manner as in Example 5 except that the surface opening ratio at which the through-holes were formed was changed to 0.5%.

The results are shown in FIG. **8****.**

### [Example 7]

A sound-absorbing material (7) having a conf iguration " [first perforated layer]/[acrylic double-sided adhesive tape]/[urethane foam (first porous layer)] / [second perforated layer] / [urethane foam (second porous layer)]," the sound-absorbing material (7) having a plurality of through-holes extending from the surface of the first perforated layer opposite to the first porous layer to the surface of the second porous layer opposite to the second perforated layer, was obtained in the same manner as in Example 5 except that the surface opening ratio at which the through-holes were formed was changed to 0.75%.

The results are shown in FIG. **8****.**

### [Example 8]

A sound-absorbing material (8) having a configuration " [first perforated layer]/[acrylic double-sided adhesive tape]/[urethane foam (first porous layer)] / [second perforated layer] / [urethane foam (second porous layer)]," the sound-absorbing material (8) having a plurality of through-holes extending from the surface of the first perforated layer opposite to the first porous layer to the surface of the second porous layer opposite to the second perforated layer, was obtained in the same manner as in Example 5 except that the surface opening ratio at which the through-holes were formed was changed to 1.0%.

The results are shown in FIG. **8****.**

### [Comparative Example 1]

Urethane foam (thickness=20 mm, manufactured by Inoac Corporation, product name: CALMFLEX F2) was used as a sound-absorbing material (C1).

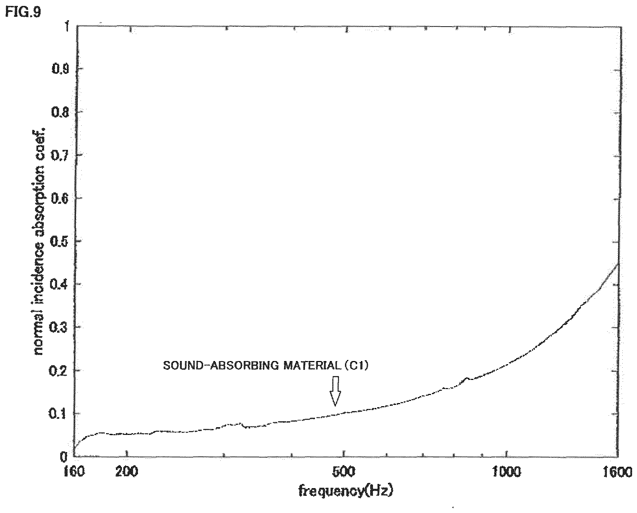

The results are shown in FIG. **9****.**

### [Comparative Example 2]

ϕ5 mm through-holes were formed in a polyethylene terephthalate film (thickness=4.8 µm, manufactured by Toray Industries, Inc., product name: Lumirror) at a surface opening ratio of 0.25%, and the resultant was used as a perforated layer.

To the perforated layer, urethane foam (thickness=20 mm, manufactured by Inoac Corporation, product name: CALMFLEX F2) was bonded. For the bonding, an acrylic double-sided adhesive tape (thickness=50 µm, manufactured by Nitto Denko Corporation, product name: GA5905) was used.

Thus, a sound-absorbing material (C2) having a configuration "[perforated layer]/[acrylic double-sided adhesive tape]/[urethane foam]" was obtained.

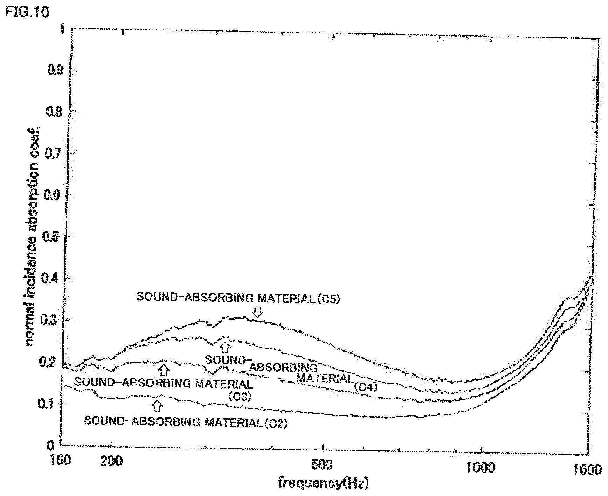

The results are shown in FIG. **10****.**

### [Comparative Example 3]

A sound-absorbing material (C3) having a configuration "[perforated layer]/[acrylic double-sided adhesive tape]/[urethane foam]" was obtained in the same manner as in Comparative Example 2 except that the surface opening ratio at which the through-holes were formed was changed to 0.5%.

The results are shown in FIG. **10****.**

### [Comparative Example 4]

A sound-absorbing material (C4) having a configuration "[perforated layer]/[acrylic double-sided adhesive tape]/[urethane foam]" was obtained in the same manner as in Comparative Example 2 except that the surface opening ratio at which the through-holes were formed was changed to 0.75%.

The results are shown in FIG. **10****.**

### [Comparative Example 5]

A sound-absorbing material (C5) having a configuration "[perforated layer]/[acrylic double-sided adhesive tape]/[urethane foam]" was obtained in the same manner as in Comparative Example 2 except that the surface opening ratio at which the through-holes were formed was changed to 1.0%.

The results are shown in FIG. **10****.**

### Industrial Applicability

The sound-absorbing material of the present invention is applicable, for example, as a sound-absorbing material for a tire.

### Reference Signs List

- **100**: sound-absorbing material
- **10A**: first perforated layer
- **10B**: first porous layer
- **20A**: second perforated layer
- **20B**: second porous layer
- **1a**: through-hole
- **2a**: through-hole
- **3**: through-hole
- **1b**: hole portion
- **2b**: hole portion

## Claims

1. A sound-absorbing material, comprising a laminated structure including in this order:
a first perforated layer;
a first porous layer;
a second perforated layer; and
a second porous layer,
wherein the first perforated layer has a plurality of through-holes in its thickness direction,
wherein the second perforated layer has a plurality of through-holes in its thickness direction, and
wherein the first perforated layer has a thickness of less than 1 mm.

2. The sound-absorbing material according to claim 1, wherein a plurality of surface opening portions of the first perforated layer formed by the plurality of through-holes of the first perforated layer have a maximum hole diameter of 1 mm or more.

3. The sound-absorbing material according to claim 2, wherein a surface opening ratio of the first perforated layer, which is a ratio of the plurality of surface opening portions in an entire surface of the first perforated layer, is 20% or less.

4. The sound-absorbing material according to any one of claims 1 to 3, wherein a plurality of surface opening portions of the second perforated layer formed by the plurality of through-holes of the second perforated layer have a maximum hole diameter of 1 mm or more.

5. The sound-absorbing material according to claim 4, wherein a surface opening ratio of the second perforated layer, which is a ratio of the plurality of surface opening portions in an entire surface of the second perforated layer, is 20% or less.

6. The sound-absorbing material according to any one of claims 1 to 5, wherein the second perforated layer has a thickness of less than 1 mm.

7. The sound-absorbing material according to any one of claims 1 to 6, wherein the first porous layer has a thickness of 1 mm or more.

8. The sound-absorbing material according to any one of claims 1 to 7, wherein the second porous layer has a thickness of 1 mm or more.

9. The sound-absorbing material according to any one of claims 1 to 8, wherein the sound-absorbing material has a total thickness of less than 300 mm.

10. The sound-absorbing material according to any one of claims 1 to 9,
wherein the first porous layer has a plurality of hole portions each formed from at least one surface of the first porous layer in its thickness direction with a length of D1 or less, D1 representing a thickness of the first porous layer, and
wherein a plurality of surface opening portions of the first porous layer formed by the plurality of hole portions have a maximum hole diameter of 1 mm or more.

11. The sound-absorbing material according to claim 10, wherein the plurality of surface opening portions of the first porous layer and a plurality of surface opening portions of the first perforated layer are arranged at overlapping positions in plan view.

12. The sound-absorbing material according to any one of claims 1 to 11,
wherein the second porous layer has a plurality of hole portions each formed from at least one surface of the second porous layer in its thickness direction with a length of D2 or less, D2 representing a thickness of the second porous layer, and
wherein a plurality of surface opening portions of the second porous layer formed by the plurality of hole portions have a maximum hole diameter of 1 mm or more.

13. The sound-absorbing material according to claim 12, wherein the plurality of surface opening portions of the second porous layer and a plurality of surface opening portions of the second perforated layer are arranged at overlapping positions in plan view.

14. The sound-absorbing material according to any one of claims 1 to 13, wherein the sound-absorbing material has a plurality of through-holes extending from a surface of the first perforated layer opposite to the first porous layer to a surface of the second porous layer opposite to the second perforated layer.

15. The sound-absorbing material according to any one of claims 1 to 14, wherein a material for forming the first perforated layer comprises at least one kind selected from a resin, a metal, a rubber, an inorganic material, a woven fabric, and a non-woven fabric.

16. The sound-absorbing material according to any one of claims 1 to 15, wherein a material for forming the second perforated layer comprises at least one kind selected from a resin, a metal, a rubber, an inorganic material, a woven fabric, and a non-woven fabric.

17. The sound-absorbing material according to any one of claims 1 to 16, wherein a material for forming the first porous layer comprises at least one kind selected from a porous polymer material, a porous metal material, a porous inorganic material, a porous woven fabric, a porous non-woven fabric, a fibrous material, and a polymer monolithic material.

18. The sound-absorbing material according to any one of claims 1 to 17, wherein a material for forming the second porous layer comprises at least one kind selected from a porous polymer material, a porous metal material, a porous inorganic material, a porous woven fabric, a porous non-woven fabric, a fibrous material, and a polymer monolithic material.
